# EUROPEAN PATENT APPLICATION

(11) **EP 3 962 160 A1**
(43) Date of publication of application: **02.03.2022**
(21) Application number: 19926157.9
(22) Date of filing: 26.04.2019
(51) Int. Cl.: H04W 28/04, H04W 16/28, H04W 72/12

(54) **USER TERMINAL AND WIRELESS COMMUNICATION METHOD**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); GUO, Shaozhen, Beijing 100190 (CN); WANG, Jing, Beijing 100190 (CN); HOU, Xiaolin, Beijing 100190 (CN)
(74) Representative: Hoffmann Eitle
(86) International application number: PCT/JP2019/018122
(87) International publication number: WO 2020/217516

(57) **Abstract**

A user terminal according to an aspect of the present disclosure includes a receiving section that receives downlink shared channels (Physical Downlink Shared Channels (PDSCHs)) from a plurality of transmission/reception points (TRPs), and a control section that identifies, based on a correspondence relationship among Physical Uplink Control Channel (PUCCH)) resources, groups for TRPs, and groups for spatial relation information (SRI), the TRP and SRI associated with a PUCCH for the PDSCHs. According to an aspect of the present disclosure, HARQ-ACK control can be suitably implemented even in a case where multiple TRPs are used.

## Description

### Technical Field

The present disclosure relates to a user terminal and a radio communication method in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (e.g., referred to as "5th generation mobile communication system (5G)," "5G+ (plus)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), studies have been conducted about DL transmission to a user terminal (User Equipment (UE)) performed by one or a plurality of transmission/reception points (TRPs) (multiple TRPs).

However, NR specifications so far do not take multiple TRPs into account, and thus Hybrid Automatic Repeat reQuest ACKnowledgement (HARQ-ACK) feedback fail to be appropriately controlled in a case where multiple TRPs are used. Consequently, following the current NR specifications may prevent suitable achievement of space diversity gain, high-rank transmission, and the like in a case where multiple TRPs are used, suppressing an increase in communication throughput.

Thus, an object of the present disclosure is to provide a user terminal and a radio communication method which can suitably implement HARQ-ACK control even in a case where multiple TRPs are used.

### Solution to Problem

A user terminal according to an aspect of the present disclosure includes a receiving section that receives downlink shared channels (Physical Downlink Shared Channels (PDSCHs)) from a plurality of transmission/reception points (TRPs), and a control section that identifies, based on a correspondence relationship among Physical Uplink Control Channel (PUCCH)) resources, groups for TRPs, and groups for spatial relation information (SRI), the TRP and SRI associated with a PUCCH for the PDSCHs.

### Advantageous Effects of Invention

According to an aspect of the present disclosure, HARQ-ACK control can be suitably implemented even in a case where multiple TRPs are used.

### Brief Description of Drawings

FIGS. 1A to 1D are each a diagram to show an example of a multi-TRP scenario;
FIG. 2 is a diagram to show an example of a correspondence relationship between PUCCH resources and PRGs according to Embodiment 1-1;
FIG. 3 is a diagram to show another example of the correspondence relationship between the PUCCH resources and the PRGs according to Embodiment 1-1;
FIG. 4 is a diagram to show yet another example of the correspondence relationship between the PUCCH resources and the PRGs according to Embodiment 1-1;
FIG. 5 is a diagram to show an example of the correspondence relationship between the PUCCH resources and the PRGs according to Embodiment 1-2;
FIG. 6 is a diagram to show another example of the correspondence relationship between the PUCCH resources and the PRGs according to Embodiment 1-2;
FIG. 7 is a diagram to show an example of the correspondence relationship between the PUCCH resources and the PRGs according to Embodiment 1-3;
FIG. 8 is a diagram to show another example of the correspondence relationship between the PUCCH resources and the PRGs according to Embodiment 1-3;
FIG. 9 is a diagram to show an example of the correspondence relationship between the PUCCH resources and the PRGs according to Embodiment 1-4;
FIG. 10 is a diagram to show an example of the correspondence relationship between the PUCCH resources and the PRGs according to Embodiment 2-1;
FIG. 11 is a diagram to show an example of the correspondence relationship between the PUCCH resources and the PRGs according to Embodiment 2-2;
FIG. 12 is a diagram to show another example of the correspondence relationship between the PUCCH resources and the PRGs according to Embodiment 2-2;
FIGS. 13A and 13B are diagrams to show an example of activation of SRI corresponding to an S-PRG;
FIGS. 14A and 14B are diagrams to show an example of a correspondence relationship between TRI and SRI;
FIG. 15 is a diagram to show an example of a schematic structure of a radio communication system according to one embodiment;
FIG. 16 is a diagram to show an example of a structure of a base station according to one embodiment;
FIG. 17 is a diagram to show an example of a structure of a user terminal according to one embodiment; and
FIG. 18 is a diagram to show an example of a hardware structure of the base station and the user terminal according to one embodiment.

### Description of Embodiments

### (Spatial Relation Information)

In NR, a UE controls transmission processing (for example, at least one of transmission, mapping, precoding, modulation, and coding) of at least one of a signal and a channel in an uplink (also expressed as signal/channel), based on a certain spatial relation.

The spatial relation applied to a certain signal/channel may be identified by spatial relation information (SRI) reported (configured) by using higher layer signaling.

Note that in the present disclosure, the higher layer signaling may be, for example, any one of Radio Resource Control (RRC) signaling, Medium Access Control (MAC) signaling, broadcast information, and the like, or a combination of these.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

For example, in Rel-15 NR, information of spatial relation (RRC "PUCCH-SpatialRelationInfo" information element) between a certain reference signal (RS) and an uplink control channel (Physical Uplink Control Channel (PUCCH)) may be included in PUCCH configuration information (RRC "PUCCH-Config" information element), which may be configured for the UE.

The certain RS may be, for example, at least one of a synchronization signal block (SSB), a channel state information reference signal (CSI-RS), and a reference signal for measurement (Sounding Reference Signal (SRS)).

The SRI configured may include an SRI Identifier (ID) for identifying the SRI. The SRI may include, as an index of the certain RS, at least one of an SSB index, a CSI-RS resource ID, and an SRS resource ID. The spatial relation information may include a serving cell index corresponding to the certain RS, a bandwidth part (BWP) ID, and so on.

Note that in the present disclosure, an index, an ID, an indicator, a resource ID, and so on may be interchangeably interpreted.

In a case where spatial relation information related to the SSB or the CSI-RS and the PUCCH is configured, the UE may transmit the PUCCH by using a spatial domain filter identical to a spatial domain filter for reception of the SSB or CSI-RS. In other words, in this case, the UE may assume that a UE receive beam for the SSB or the CSI-RS is identical to a UE transmission beam for the PUCCH.

In a case where spatial relation information related to the SRS and the PUCCH is configured, the UE may transmit the PUCCH by using a spatial domain filter identical to a spatial domain filter for transmission of the SRS. In other words, in this case, the UE may assume that a UE transmission beam for the SRS is identical to a UE transmission beam for the PUCCH.

Note that the spatial domain filter for transmission from a base station, a downlink spatial domain transmission filter, and a transmission beam from the base station may be interchangeably interpreted. Note that the spatial domain filter for reception by the base station, an uplink spatial domain receive filter, and a receive beam for the base station may be interchangeably interpreted.

The spatial domain filter for transmission from the UE, an uplink spatial domain transmission filter, and a transmission beam from the UE may be interchangeably interpreted. The spatial domain filter for reception by the UE, a downlink spatial domain receive filter, and a receive beam for the UE may be interchangeably interpreted.

The SRI may be configured for the UE in units of PUCCH configuration (PUCCH-Config). The SRI configured by PUCCH configuration may be applied to all PUCCH resources configured by the PUCCH configuration.

In a case where more than one piece of SRI related to the PUCCH is configured for the UE, the UE may perform control such that one piece of PUCCH SRI is activated at a certain time for one PUCCH resource, based on PUCCH spatial relation activation/deactivation MAC CE.

### (Multiple TRPs)

In NR, a scheme in which one or a plurality of transmission/reception points (TRPs) (multiple TRPs) perform DL transmission to a UE by using one or a plurality of panels (multiple panels) has been under study. A scheme in which the UE performs UL transmission to one or a plurality of TRPs has been under study.

Note that the plurality of TRPs may correspond to the same cell identifier (ID), or may correspond to different cell IDs. The cell ID may be a physical cell ID, or may be a virtual cell ID.

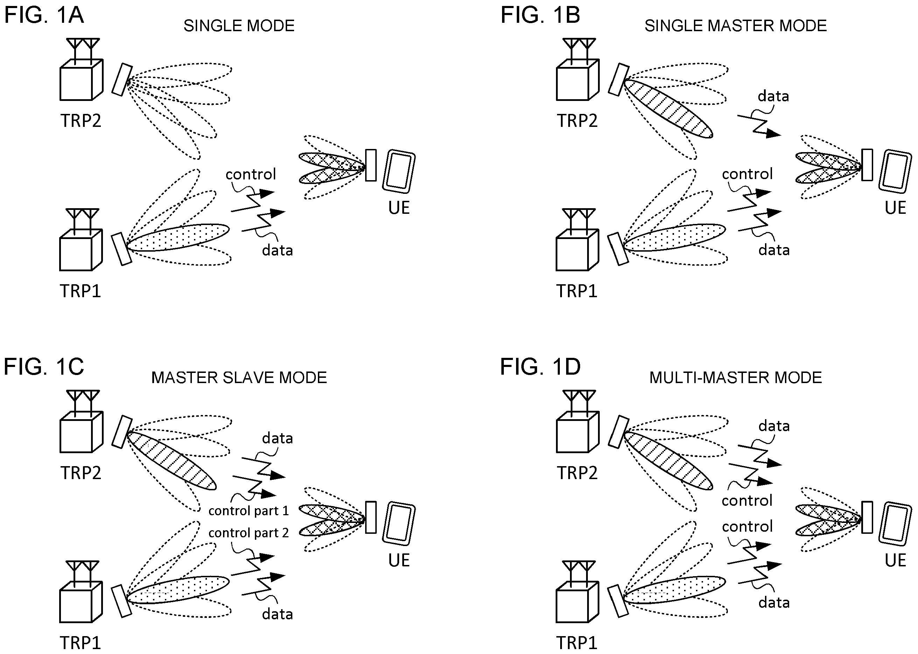

FIGS. 1A to 1D are each a diagram to show an example of a multi-TRP scenario. In these examples, it is assumed that each TRP can transmit four different beams, but this is not restrictive.

FIG. 1A shows an example of a case in which only one TRP (in the present example, TRP 1) out of the multiple TRPs performs transmission to the UE (which may be referred to as a single mode, a single TRP, or the like). In this case, TRP 1 transmits both a control signal (PDCCH) and a data signal (PDSCH) to the UE.

FIG. 1B shows an example of a case in which only one TRP (in the present example, TRP 1) out of the multiple TRPs transmits a control signal to the UE, and each of the multiple TRPs transmits a data signal (which may be referred to as a single master mode). The UE receives each PDSCH transmitted from the multiple TRPs, based on one piece of downlink control information (DCI).

FIG. 1C shows an example of a case in which each of the multiple-TRPs transmits a part of a control signal to the UE, and each of the multiple TRPs transmits a data signal (which may be referred to as a master slave mode). In TRP 1, part 1 of the control signal (DCI) may be transmitted, and in TRP 2, part 2 of the control signal (DCI) may be transmitted. Part 2 of the control signal may depend on part 1. The UE receives each PDSCH transmitted from the multiple TRPs, based on these parts of DCI.

FIG. 1D shows an example of a case in which each of the multiple TRPs transmits separate control signals to the UE, and each of the multiple TRPs transmits a data signal (which may be referred to as a multi-master mode). In TRP 1, a first control signal (DCI) may be transmitted, and in TRP 2, a second control signal (DCI) may be transmitted. The UE receives each PDSCH transmitted from the multiple TRPs, based on these pieces of DCI.

When a plurality of PDSCHs (which may be referred to as multi PDSCHs (multiple PDSCHs)) from the multiple TRPs as shown in FIG. 1B are scheduled by using one piece of DCI, the piece of DCI may be referred to as single DCI (single PDCCH). When a plurality of PDSCHs from the multiple TRPs as shown in FIG. 1D are scheduled by using a plurality of respective pieces of DCI, the plurality of pieces of DCI may be referred to as multiple pieces of DCI (multi PDCCHs (multiple PDCCHs)).

According to the multi-TRP scenario as described above, more flexible transmission control using channels with satisfactory quality can be performed.

From each TRP of the multiple TRPs, a different code word (CW) and a different layer may be transmitted. As one form of the multi-TRP transmission, non-coherent joint transmission (NCJT) has been under study.

In NCJT, for example, TRP 1 performs modulation mapping of the first code word and performs layer mapping so as to transmit the first PDSCH by using first precoding for a first number of layers (for example, two layers). TRP 2 performs modulation mapping of the second code word and performs layer mapping so as to transmit the second PDSCH by using second precoding for a second number of layers (for example, two layers). It may be assumed that these first PDSCH and second PDSCH are not in a relationship of quasi-co-location (QCL) (not quasi-co-located).

Note that the plurality of PDSCHs subjected to NCJT may be defined to partially or entirely overlap in terms of at least one of the time and frequency domains. In other words, at least one of time and frequency resources of the first PDSCH from the first TRP and the second PDSCH from the second TRP may overlap.

As one of Hybrid Automatic Repeat reQuest ACKnowledgement (HARQ-ACK) feedbacks for multiple PDSCHs, separate HARQ-ACK has been studied.

The separate HARQ-ACK corresponds to feedback in which the HARQ-ACK is transmitted for each TRP by using a plurality of uplink control channel (Physical Uplink Control Channel (PUCCH))/uplink shared channel (Physical Uplink Shared Channel (PUSCH)) resources. The plurality of PUCCH/PUSCH resources may overlap (may be simultaneously transmitted) or may not overlap.

Note that the PUCCH/PUSCH may mean at least one of the PUCCH and the PUSCH (hereinafter, "A/B" may be similarly interpreted as "at least one of A and B").

DCI scheduling multiple PDSCHs may include a field for a PUCCH resource indicator (PRI). The PRI corresponds to information specifying resources for transmitting the HARQ-ACK corresponding to the PDSCH, and may also be referred to as an ACK/NACK resource indicator (ARI).

The UE may determine, based on the PRI, a PUCCH resource for transmitting the HARQ-ACK corresponding to the above-described multiple PDSCHs.

The use of the separate HARQ-ACK enables independent HARQ-ACK transmission for each TRP. Even a long backhaul delay between TRPs (for example, connection between TRPs by a non ideal backhaul) is prevented from increasing a delay in HARQ.

PUCCH resources for the separate HARQ-ACK for the respective TRPs may be constituted with temporal overlap permitted or may be constituted with temporal overlap not permitted. To flexibly control PUCCH resources for the separate HARQ-ACK, definition of PUCCH resource groups has been under study.

For example, a UE for which a PUCCH resource group is configured by the network may assume that none of the PUCCH resources included in a first PUCCH resource group temporally overlap the PUCCH resources included in a second PUCCH resource group.

For multi-TRP transmission, separate HARQ-ACK feedback is preferably supported. In that case, it is desired that indication and update of spatial relation information for each group and the like are supported.

However, sufficient studies have not been conducted about how to configure PUCCH resources for multiple TRPs and how to control indication/update of SRI. Lack of definite specification of these may prevent suitable achievement of spatial diversity gain, high-rank transmission, and the like in a case where multiple TRPs are used, suppressing an increase in communication throughput.

Thus, the inventors of the present invention came up with HARQ-ACK control that can deal with the use of multiple TRPs.

Embodiments according to the present disclosure will be described in detail with reference to the drawings as follows. The radio communication methods according to respective embodiments may each be employed individually, or may be employed in combination.

Note that, in the present disclosure, the followings may be interchangeably interpreted: a panel, an Uplink (UL) transmission entity, a TRP, a demodulation reference signal (DMRS) port, a DMRS port group, a code division multiplexing (CDM) group, a group associated with a certain reference signal, a control resource set (CORESET) group, a CORESET, a PDSCH, a codeword, a base station, and the like. A panel Identifier (ID) and a panel may be interchangeably interpreted with each other. A TRP ID and a TRP may be interchangeably interpreted.

In the present disclosure, NCJT, NCJT using multiple TRPs, multiple PDSCHs using NCJT, multiple PDSCHs, a plurality of PDSCHs from multiple TRPs may be interchangeably interpreted.

Hereinafter, in the present disclosure, a group of PUCCH resources related to multiple TRPs, a TRP PUCCH resource group (TRP-PRG, T-PRG), a group for PUCCH resource allocation, and the like may be interchangeably interpreted.

The UE may assume that PUCCH resources belonging to one T-PRG corresponds to the identical TRP. The UE may assume that a PUCCH resource belonging to the first T-PRG and a PUCCH resource belonging to the second T-PRG correspond to different TRPs.

In the present disclosure, a group of PUCCH resources for at least one of indication and update of PUCCH SRI, an SRI PUCCH resource group (SRI-PRG, S-PRG), and the like may be interchangeably interpreted.

The UE may assume that identical SRI is used for PUCCH resources belonging to one S-PRG. The UE may assume that different pieces of SRI are used for a PUCCH resource belonging to the first S-PRG and for a PUCCH resource belonging to the second S-PRG.

A "group" in the present disclosure may be interpreted as grouping, a sequence, a list, a set, and so on. A resource group may be interpreted as one or a plurality of resources. In other words, the T-PRG, the S-PRG, and the like each may correspond to one or a plurality of resources.

The T-PRG may be interpreted as one or a plurality of resources associated with an identical TRP. The S-PRG may be interpreted as one or a plurality of resources associated with identical SRI (or an identical reference signal, an identical reference signal resource, or the like).

Embodiments described below will be described below on the assumption of the separate HARQ-ACK. However, the embodiments may be applied to joint HARQ-ACK. The embodiments described below will be described on the assumption that multiple PDSCHs are scheduled by multiple PDCCHs. However, the embodiments may be applied to a case where multiple PDSCHs are scheduled by a single PDCCH.

Note that in the present disclosure, the SRI may be interchangeably interpreted with spatial relation information (SRI) of the PUCCH, an RRC parameter "Spatialrelationinfo," an SRI ID, and so on.

### (Radio Communication Method)

The embodiments described below are roughly classified into a first embodiment in which T-PRGs and S-PRGs are separately (independently) configured for the UE and a second embodiment in which T-PRGs and S-PRGs are configured identically (in common) for the UE.

Briefly speaking, the first embodiment can be classified into the following embodiments, each of which will be described below.
- Embodiment 1-1: overlapping of T-PRGs allowed and no overlapping of S-PRGs,
- Embodiment 1-2: no overlapping of T-PRGs, and no overlapping of S-PRGs,
- Embodiment 1-3: overlapping of T-PRGs allowed and overlapping of S-PRG,
- Embodiment 1-4: no overlapping of T-PRGs, and overlapping of S-PRGs.

Briefly speaking, the second embodiment can be classified into the following embodiments, each of which will be described below.
- Embodiment 2-1: overlapping of (T-/S-)PRGs, and
- Embodiment 2-2: no overlapping of (T-/S-)PRGs.

Embodiments 1-1, 1-3, and 2-1 enable PUCCH resources to be shared among TRPs, and allow for dynamic cooperation to avoid collision between PUCCH resources, and are thus particularly suitable for an ideal backhaul.

Embodiments 1-2, 1-4, and 2-2 allow for a predefined structure or semi-static corporation to avoid collision between PUCCH resources, and are thus particularly suitable for a non ideal backhaul.

Note that Embodiment 1-2 has the advantage of enabling a plurality of S-PRGs to be configured/activated for one TRP, allowing more flexible update of PUCCH SRI to be achieved than Embodiment 2-2.

### <First Embodiment>

In the first embodiment, for example, the T-PRG may be configured by RRC signaling, MAC signaling (for example, MAC CE), or a combination of these. The S-PRG may be configured by RRC signaling, MAC signaling (for example, MAC CE), or a combination of these.

The number of T-PRGs may be defined by specifications or configured by higher layer signaling. For example, the number of the groups may be one or may be equal to or larger than two. The number of T-PRGs may be identical to the number of TRPs configured for the UE.

The number of S-PRGs may be defined by specifications or configured by higher layer signaling. For example, the number of the groups may be one or may be equal to or larger than two. The number of S-PRGs may be identical to the number of TRPs configured for the UE.

At least one of the number of T-PRGs and the number of S-PRGs need not be directly configured. For example, in a case where the number of PUCCH resources included in one T-PRG (or S-PRG) (the number may also be referred to as the size of the T-PRG (or S-PRG)) is configured for the UE by higher layer signaling, the UE may identify, based on the size and the size of a PUCCH resource set, the number of T-PRGs (or S-PRGs) included in the PUCCH resource set.

Note that the number of T-PRGs may be identical to the number of S-PRGs. In this case, the plurality of S-PRGs may correspond to the plurality of TRPs on a one-to-one basis. Note that the number of T-PRGs may differ from the number of S-PRGs.

### <<Embodiment 1-1>>

In Embodiment 1-1, a PUCCH resource belonging to a certain T-PRG is permitted to overlap a PUCCH resource belonging to another T-PRG. In other words, a certain PUCCH resource ID may be shared among different TRPs (a plurality of T-PRGs). On the other hand, a plurality of S-PRGs do not overlap. In other words, a certain PUCCH resource ID does not belong to more than one S-PRG. In Embodiment 1-1, PUCCH resources (IDs) corresponding to a plurality of T-PRGs may be included in one S-PRG.

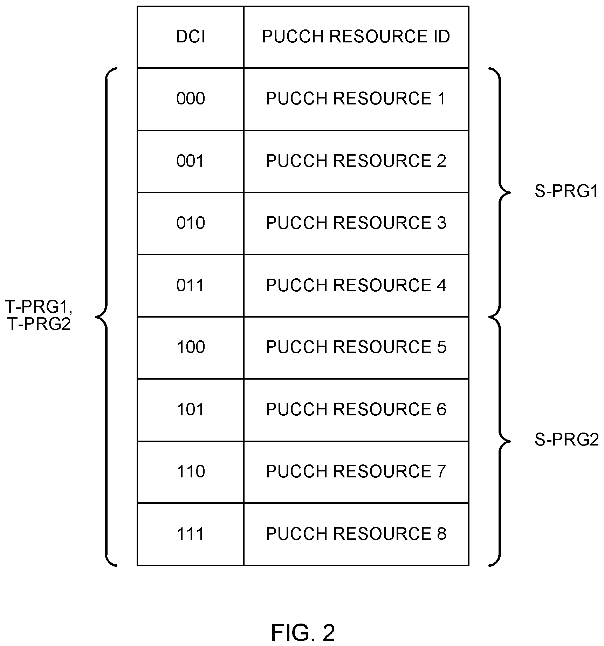

FIG. 2 is a diagram to show an example of a correspondence relationship between PUCCH resources and PRGs according to Embodiment 1-1. FIG. 2 corresponds to a case where the T-PRGs are identical in number to the S-PRGs.

The present example illustrates a case in which a certain PUCCH resource set includes eight PUCCH resources (PUCCH resources 1 to 8) and the PRI can be used to specify any of the PUCCH resources (ARI includes three bits). For simplification, the configuration of the PUCCH resource set also applies to examples in the subsequent drawings.

In FIG. 2, different PUCCH resources are specified in accordance with the value of the PRI field. For example, the values of the PRI field = 000, 001, ..., 111 correspond to PUCCH resources 1, 2, ... 8.

FIG. 2 shows that all of PUCCH resources 1 to 8 are associated with both T-PRGs 1 and 2. In other words, all of these resources are associated with both TRPs 1 and 2. FIG. 2 shows that PUCCH resources 1 to 4 are associated with S-PRG 1 and that PUCCH resources 5 to 8 are associated with S-PRG 2.

Note that in the present disclosure, the UE for which PUCCH resources associated with a plurality of TRPs are specified may identify which of the TRPs the PUCCH to be actually transmitted corresponds to, based on at least one of the followings.
- which of the TRPs the PDSCH corresponding to the PUCCH (HARQ-ACK) has been transmitted from,
- which of the TRPs the DCI for scheduling the PDSCH corresponding to the PUCCH (HARQ-ACK) has been transmitted from,
- the value of a certain field (for example, a field specifying the TRP) included in the DCI scheduling the PDSCH corresponding to the PUCCH (HARQ-ACK),
- the DMRS (a sequence of DMRS, resources for the DMRS, and the like) corresponding to the PDSCH corresponding to the PUCCH (HARQ-ACK), and
- the DMRS (a sequence of DMRS, resources for the DMRS, and the like) corresponding to the PDCCH on which the DCI scheduling the PDSCH corresponding to the PUCCH (HARQ-ACK) has been transmitted.

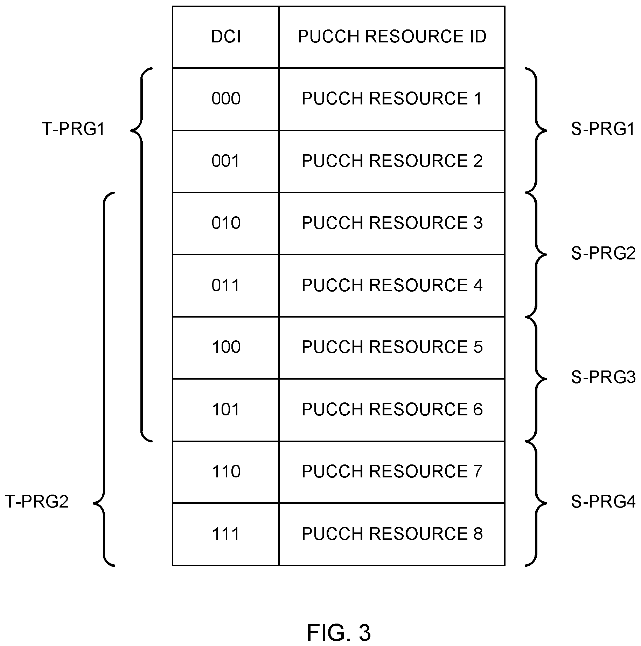

FIG. 3 is a diagram to show another example of the correspondence relationship between the PUCCH resources and the PRGs according to Embodiment 1-1. FIG. 3 corresponds to a case where the number of T-PRGs is smaller than the number of S-PRGs.

FIG. 3 shows that PUCCH resources 1 to 6 are associated with T-PRG 1 and that PUCCH resources 3 to 8 are associated with T-PRG 2. FIG. 3 shows that PUCCH resources 1 and 2 are associated with S-PRG 1 and that PUCCH resources 3 and 4 are associated with S-PRG 2 and that PUCCH resources 5 and 6 are associated with S-PRG 3 and that PUCCH resources 7 and 8 are associated with S-PRG 4.

The number of T-PRGs configured being smaller than the number of S-PRGs as shown in FIG. 3 produces the effect of enabling the PUCCH resources to be flexibly controlled for multiple TRPs and allowing the PUCCH spatial relations to be flexibly changed within the TRPs. For example, the base station can dynamically specify three pieces of SRI of S-PRGs 1 to 3 as SRI for T-PRG 1 for the UE.

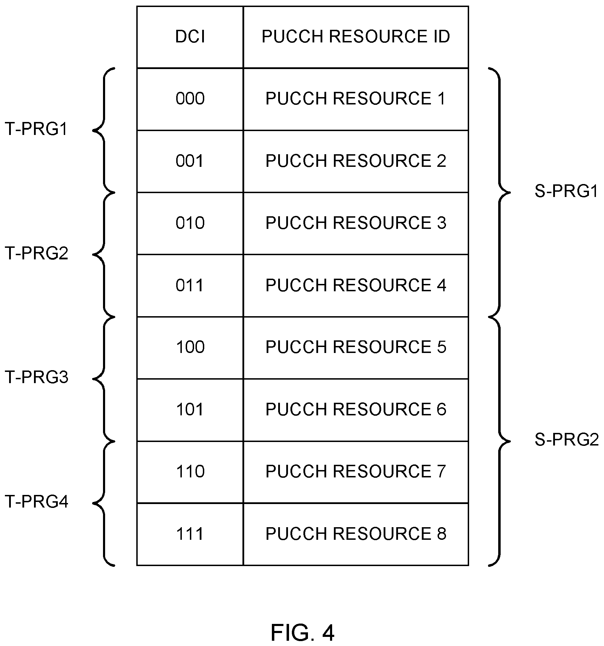

FIG. 4 is a diagram to show yet another example of the correspondence relationship between the PUCCH resources and the PRGs according to Embodiment 1-1. FIG. 4 corresponds to a case where the number of T-PRGs is greater than the number of S-PRGs.

FIG. 4 shows that PUCCH resources 1 and 2 are associated with T-PRG 1 and that PUCCH resources 3 and 4 are associated with T-PRG 2 and that PUCCH resources 5 and 6 are associated with T-PRG 3 and that PUCCH resources 7 and 8 are associated with T-PRG 4. FIG. 4 shows that PUCCH resources 1 to 6 are associated with S-PRG 1 and that PUCCH resources 3 to 8 are associated with T-PRG 2.

The number of T-PRGs configured being greater than the number of S-PRGs as shown in FIG. 4 produces the effect of enabling the PUCCH spatial relations to be flexibly controlled for multiple TRPs and allowing the PUCCH resources to be flexibly changed for identical SRI. For example, the base station can dynamically specify two TRPs of T-PRGs 1 and 2 as TRP for S-PRG 1 for the UE.

### <<Embodiment 1-2>>

In Embodiment 1-2, a PUCCH resource belonging to a certain T-PRG is not permitted to overlap a PUCCH resource belonging to another T-PRG. In other words, a certain PUCCH resource ID is not shared among different TRPs. A plurality of S-PRGs do not overlap. In other words, a certain PUCCH resource ID does not belong to more than one S-PRG. In Embodiment 1-2, PUCCH resources (IDs) corresponding to a plurality of T-PRGs need not be permitted to be included in one S-PRG.

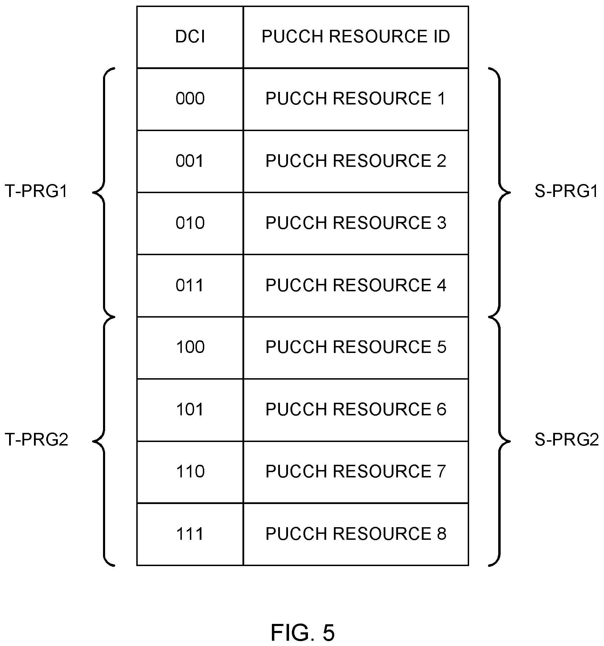

FIG. 5 is a diagram to show an example of the correspondence relationship between the PUCCH resources and the PRGs according to Embodiment 1-2. FIG. 5 corresponds to a case where the T-PRGs are identical in number to the S-PRGs.

FIG. 5 shows that PUCCH resources 1 to 4 are associated with T-PRG 1 and that PUCCH resources 5 to 8 are associated with T-PRG 2. FIG. 5 shows that PUCCH resources 1 to 4 are associated with S-PRG 1 and that PUCCH resources 5 to 8 are associated with S-PRG 2.

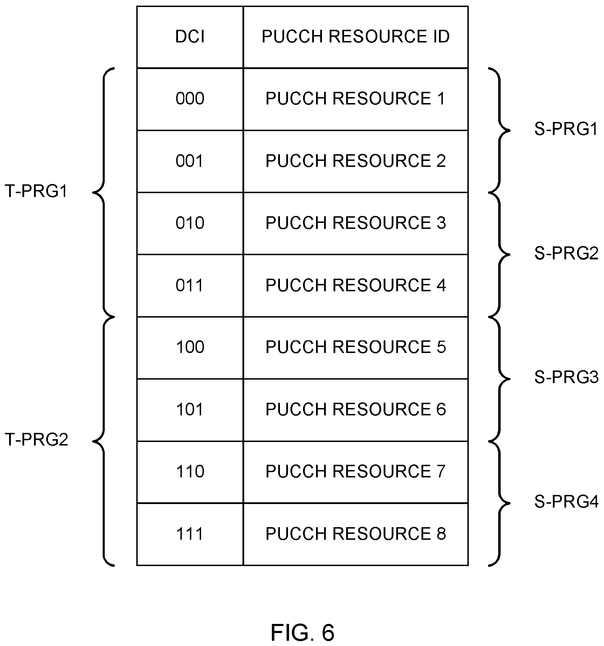

FIG. 6 is a diagram to show another example of the correspondence relationship between the PUCCH resources and the PRGs according to Embodiment 1-2. FIG. 6 corresponds to a case where the number of T-PRGs is smaller than the number of S-PRGs.

FIG. 6 shows that PUCCH resources 1 to 4 are associated with T-PRG 1 and that PUCCH resources 5 to 8 are associated with T-PRG 2. FIG. 6 shows that PUCCH resources 1 and 2 are associated with S-PRG 1 and that PUCCH resources 3 and 4 are associated with S-PRG 2 and that PUCCH resources 5 and 6 are associated with S-PRG 3 and that PUCCH resources 7 and 8 are associated with S-PRG 4.

The effect of such a configuration is as described with reference to FIG. 3. A case where the number of T-PRGs is configured being greater than the number of S-PRGs also produces the effect described with reference to FIG. 4.

### <<Embodiment 1-3>>

In Embodiment 1-3, a PUCCH resource belonging to a certain T-PRG is permitted to overlap a PUCCH resource belonging to another T-PRG. In other words, a certain PUCCH resource ID may be shared among different TRPs (a plurality of T-PRGs). A plurality of S-PRGs are permitted to overlap as well. In other words, a certain PUCCH resource ID may belong to more than one S-PRG. In Embodiment 1-3, PUCCH resources (IDs) corresponding to a plurality of T-PRGs may be included in one S-PRG.

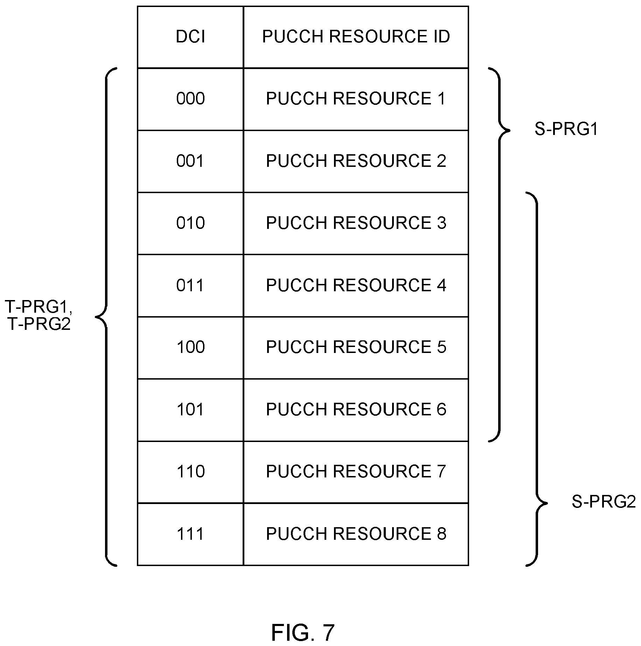

FIG. 7 is a diagram to show an example of the correspondence relationship between the PUCCH resources and the PRGs according to Embodiment 1-3. FIG. 7 corresponds to a case where the T-PRGs are identical in number to the S-PRGs.

FIG. 7 shows that all of PUCCH resources 1 to 8 are associated with both T-PRGs 1 and 2. In other words, all of these resources are associated with both TRPs 1 and 2. FIG. 7 shows that PUCCH resources 1 to 6 are associated with S-PRG 1 and that PUCCH resources 3 to 8 are associated with S-PRG 2.

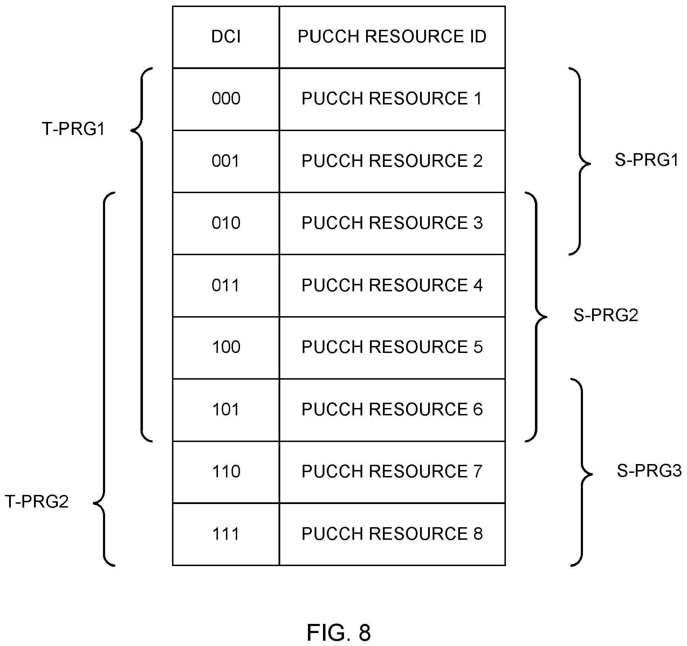

FIG. 8 is a diagram to show another example of the correspondence relationship between the PUCCH resources and the PRGs according to Embodiment 1-3. FIG. 8 corresponds to a case where the number of T-PRGs is smaller than the number of S-PRGs.

FIG. 8 shows that PUCCH resources 1 to 6 are associated with T-PRG 1 and that PUCCH resources 3 to 8 are associated with T-PRG 2. FIG. 8 shows that PUCCH resources 1 to 3 are associated with S-PRG 1 and that PUCCH resources 3 to 6 are associated with S-PRG 2 and that PUCCH resources 6 to 8 are associated with S-PRG 3. As described above, a plurality of PRGs may be different from one another in size.

As shown in FIGS. 7 and 8, in Embodiments 1 to 3, the PUCCH resource in a certain T-PRG may belong to a plurality of S-PRGs. In this case, the UE needs to identify the S-PRG (SRI) used to transmit the PUCCH resource.

The UE may determine the SRI applied to the PUCCH, based on the DCI scheduling the PDSCH corresponding to the PUCCH or CORESET (or the CORESET group) in which the DCI has been received.

For example, in FIG. 7, PUCCH resources 3 to 6 belong to a plurality of S-PRGs. In this regard, assuming that the DCI corresponds to TRP 1 and that the PRI included in the DCI indicates PUCCH resource 4, the UE may determine the SRI in accordance with the S-PRG associated with TRP 1. Note that the correspondence relationship between the TRP (or T-PRG) and the SRI (or S-PRG) will be described below.

### <<Embodiment 1-4>>

In Embodiment 1-4, a PUCCH resource belonging to a certain T-PRG is not permitted to overlap a PUCCH resource belonging to another T-PRG. In other words, a certain PUCCH resource ID is not shared among different TRPs. On the other hand, a plurality of S-PRGs are permitted to overlap. In other words, a certain PUCCH resource ID may belong to more than one S-PRG. In Embodiment 1-4, PUCCH resources (IDs) corresponding to a plurality of T-PRGs may be included in one S-PRG.

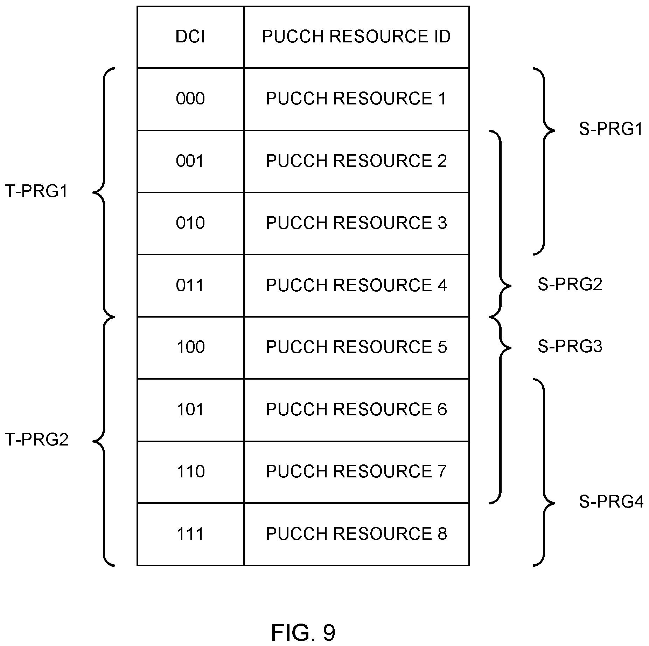

FIG. 9 is a diagram to show an example of the correspondence relationship between the PUCCH resources and the PRGs according to Embodiment 1-4.

FIG. 9 shows that PUCCH resources 1 to 4 are associated with T-PRG 1 and that PUCCH resources 5 to 8 are associated with T-PRG 2. FIG. 9 shows that PUCCH resources 1 to 3 are associated with S-PRG 1 and that PUCCH resources 2 to 4 are associated with S-PRG 2 and that PUCCH resources 5 to 7 are associated with S-PRG 3 and that PUCCH resources 6 to 8 are associated with S-PRG 4.

As shown in FIG. 9, in Embodiments 1 to 4, the PUCCH resource in a certain T-PRG may belong to a plurality of S-PRGs. In this case, the UE needs to identify the S-PRG (SRI) used to transmit the PUCCH resource.

The UE may determine the SRI applied to the PUCCH, based on the DCI scheduling the PDSCH corresponding to the PUCCH or CORESET (or the CORESET group) in which the DCI has been received. For a certain PUCCH resource, the UE may determine the SRI in accordance with a specific S-PRG of the S-PRGs to which the PUCCH resource belongs (for example, the S-PRG with the smallest or greatest index) .

For example, in FIG. 9, PUCCH resources 2 and 3 and 6 and 7 belong to a plurality of S-PRGs. In this regard, assuming that the DCI corresponds to TRP 1 and that the PRI included in the DCI indicates PUCCH resource 2, the UE may determine the SRI in accordance with S-PRG 1. Assuming that the DCI corresponds to TRP 1 and that the PRI included in the DCI indicates PUCCH resource 6, the UE may determine the SRI in accordance with S-PRG 3.

According to the first embodiment described above, the correspondence relationship between the PUCCH resources and the TRPs and SRI can be flexibly controlled.

### <Second Embodiment>

A second embodiment corresponds to an aspect of the first embodiment in which the T-PRG and the S-PRG are equated with each other. Thus, the T-PRG and the S-PRG may be replaced simply with the PRG, but for simplification of description, the designations T-PRG and S-PRG are directly used. The configuration of the PRGs and the like have been described in the first embodiment, and thus duplicated descriptions will not be repeated.

### <<Embodiment 2-1>>

In Embodiment 2-1, a PUCCH resource belonging to a certain PRG is permitted to overlap a PUCCH resource belonging to another PRG. In other words, a certain PUCCH resource ID may be shared among a plurality of PRGs.

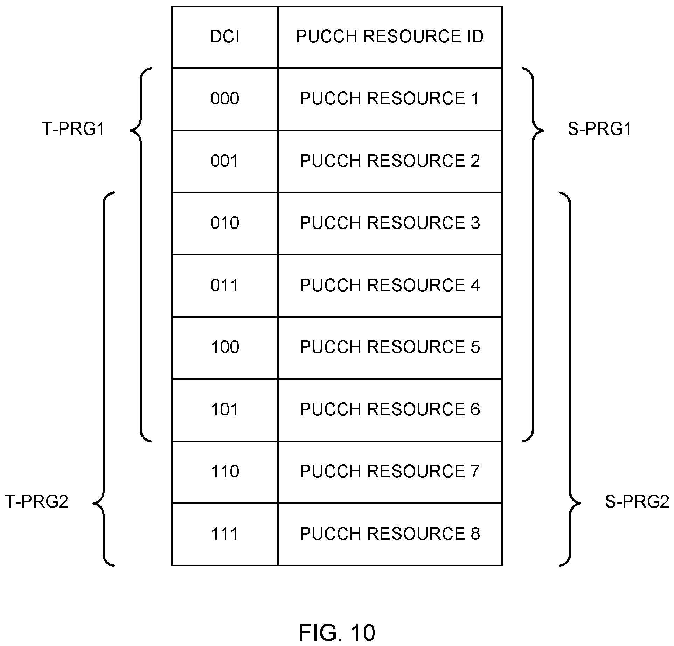

FIG. 10 is a diagram to show an example of the correspondence relationship between the PUCCH resources and the PRGs according to Embodiment 2-1.

FIG. 10 shows that PUCCH resources 1 to 6 are associated with (T-/S-)PRG 1 and that PUCCH resources 3 to 8 are associated with (T-/S-)PRG 2.

As shown in FIG. 10, in Embodiment 2-1, a certain PUCCH resource may belong to a plurality of (S-)PRGs. In this case, the UE needs to identify the (S-)PRG (SRI) used to transmit the PUCCH resource. This may be controlled as is the case with Embodiment 1-3, and thus descriptions will not be repeated.

<<Embodiment 2-2>>

In Embodiment 2-2, a PUCCH resource belonging to a certain PRG is not permitted to overlap a PUCCH resource belonging to another PRG. In other words, a certain PUCCH resource ID is not shared among a plurality of PRGs, and thus the TRP and the SRI corresponding to the PUCCH resource can be uniquely specified by the UE.

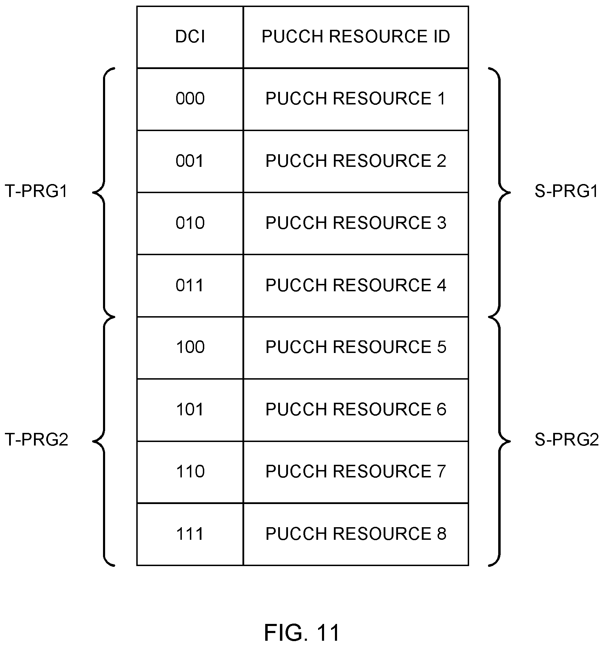

FIG. 11 is a diagram to show an example of the correspondence relationship between the PUCCH resources and the PRGs according to Embodiment 2-2.

FIG. 11 shows that PUCCH resources 1 to 4 are associated with (T-/S-)PRG 1 and that PUCCH resources 5 to 8 are associated with (T-/S-)PRG 2.

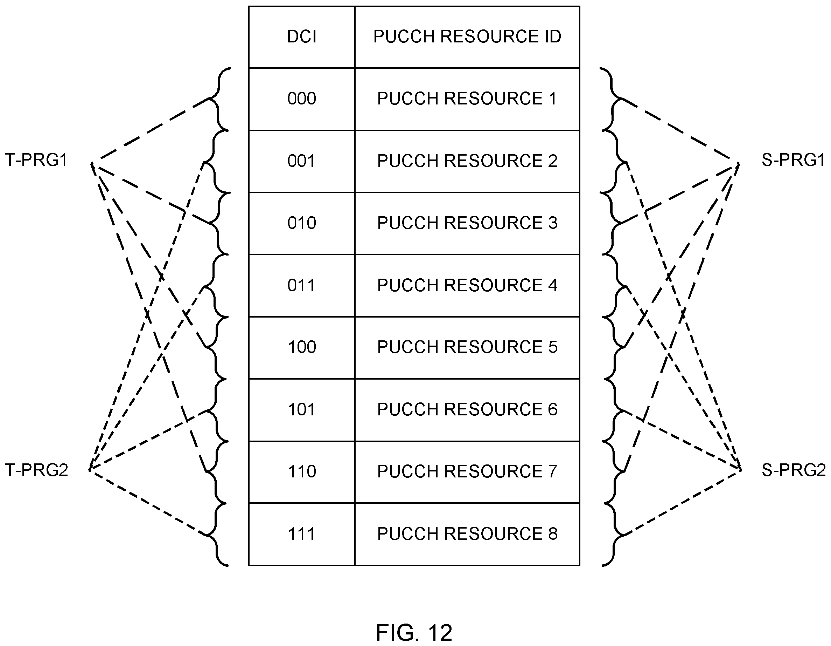

FIG. 12 is a diagram to show another example of the correspondence relationship between the PUCCH resources and the PRGs according to Embodiment 2-2.

FIG. 12 shows that PUCCH resources with odd-numbered indices (1, 3, 5, and 7) are associated with (T-/S-)PRG 1 and that PUCCH resources with even-numbered indices (2, 4, 6, and 8) are associated with (T-/S-)PRG 2.

Note that FIGS. 2 to 11 show examples in which the indices of the PUCCH resources included in one (T-/S-)PRG are sequentially numbered but that the indices of the PUCCH resources included in one (T-/S-)PRG need not be sequentially numbered as shown in FIG. 12.

According to the second embodiment described above, the correspondence relationship between the PUCCH resources and the TRPs and SRI can be flexibly controlled.

### <Modified Aspects>

Contents described below may be used for the first and second embodiments.

### [Meaning of Overlap]

For the T-PRGs, "overlap" may mean that a certain PUCCH resource ID is shared among different TRPs (a plurality of T-PRGs).

Note that in a case of PUCCH resource ID X shared among a plurality of TRPs, the UE may assume that the PUCCH resource overlaps in a time domain (for example, an identical time resource is used for PUCCH transmission to a plurality of TRPs).

In a case of the PUCCH resource ID X not shared among a plurality of TRPs, the UE may determine, based on configuration from the network (for example, configuration provided by higher layer parameters), whether the PUCCH resource overlaps in the time domain.

For the S-PRGs, "overlap" may mean that a certain PUCCH resource ID is shared among a plurality of S-PRGs. Such sharing allows PUCCH spatial relation information to be more flexibly updated.

On the other hand, for the S-PRGs, overlap may indicate the inclusion of a PUCCH resource corresponding to TRPs with different S-PRGs. Such definition of overlap may be used in a case where a PUCCH resource is present that is associated with a plurality of TRPs.

### [Activation of SRI Corresponding to S-PRG]

Linkage of SRI corresponding to an S-PRG may be performed by RRC signaling. On the other hand, for the UE, SRI corresponding to one or a plurality of S-PRGs may be activated by using a MAC CE (activation may also be referred to as indication, update, and so on). For example, the UE may determine, based on the MAC CE, which of the S-PRGs a plurality of pieces of SRI configured by higher layer signaling correspond to.

The MAC CE may include information indicating SRI corresponding to one S-PRG or information indicating pieces of SRI corresponding to the respective plurality of S-PRGs. For example, the MAC CE may include information for identifying one or a plurality of S-PRGs (for example, S-PRG indices) and information for identifying SRI corresponding to each of the S-PRGs (for example, SRI indices).

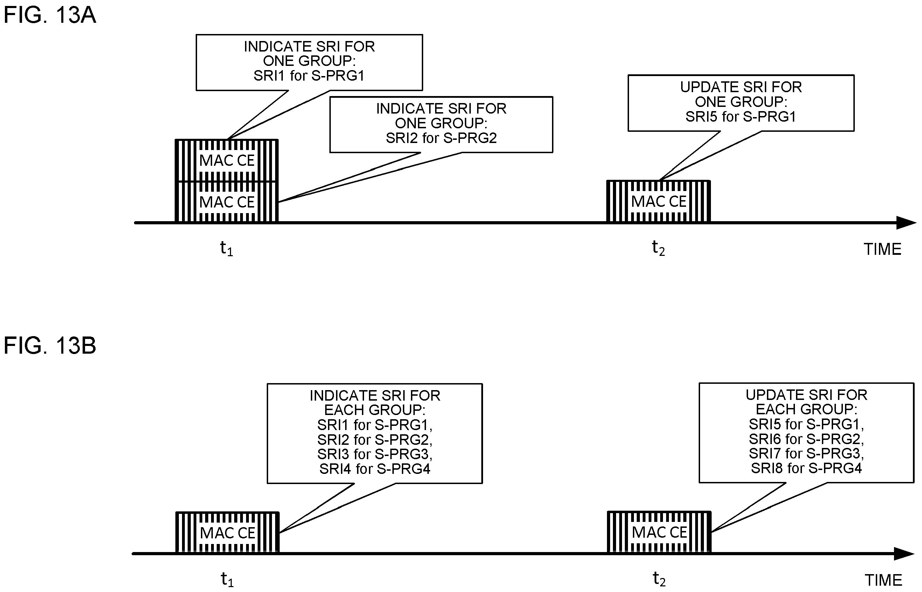

FIGS. 13A and 13B are diagrams to show an example of activation of SRI corresponding to an S-PRG. FIG. 13A shows an example in which the above-described MAC CE includes SRI corresponding to one group (S-PRG).

In FIG. 13A, at time t₁, the UE receives two MAC CEs described above. The UE determines, based on one of the MAC CEs, that the SRI in the S-PRG 1 has been indicated as SRI 1 and determines, based on the other of the MAC CEs, that the SRI in the S-PRG 2 has been indicated as SRI 2.

In FIG. 13A, at time t₂, the UE receives one of the MAC CEs. The UE determines, based on the MAC CE, that the SRI in the S-PRG 1 has been updated to SRI 5.

FIG. 13B shows an example in which the above-described MAC CE includes a plurality of SRI corresponding to a plurality of S-PRGs.

In FIG. 13B, at time t₁, the UE receives one MAC CE described above. The UE determines, based on the MAC CE, that the pieces of SRI in the S-PRGs 1, 2, 3, and 4 have been respectively indicated as pieces of SRI 1, 2, 3, and 4.

In FIG. 13B, at time t₁, the UE receives one MAC CE described above. The UE determines, based on the MAC CE, that the pieces of SRI in the S-PRGs 1, 2, 3, and 4 have been respectively updated to pieces of SRI 5, 6, 7, and 8.

### [Correspondence Relationship between TRPs and SRI]

At least one of the SRI and the S-PRG may be linked to at least one of the TRP and the T-PRG by higher layer signaling (for example, RRC signaling).

For example, the correspondence relationship between the SRI index or the S-PRG index and the TRP index or the T-PRG index may be configured by higher layer signaling.

The UE may determine the SRI corresponding to a TRP, based on the signal corresponding to the TRP (for example, CSI-RS, SSB, or SRS).

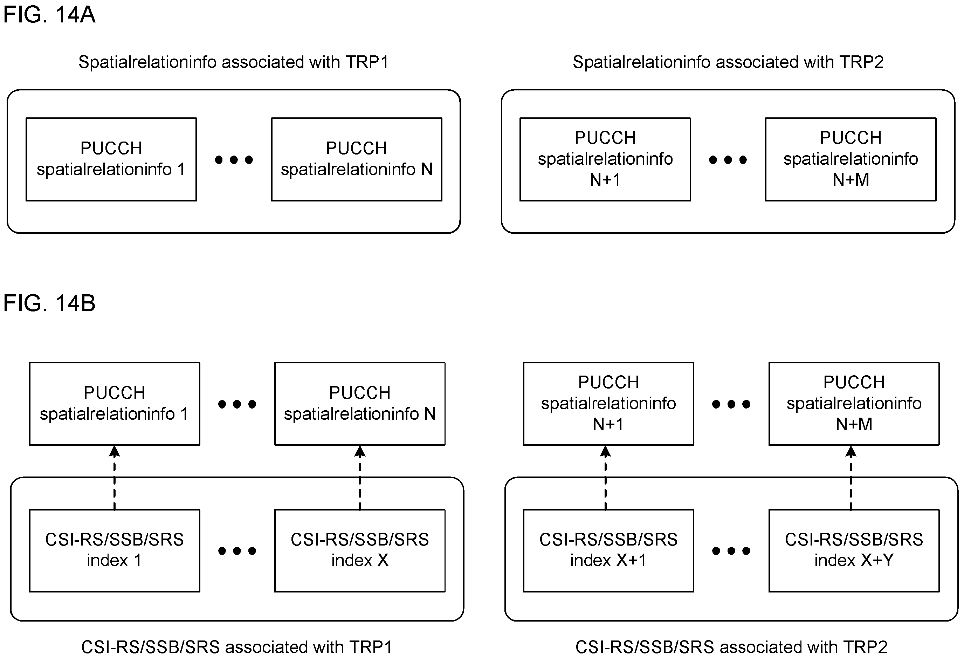

FIGS. 14A and 14B are diagrams to show an example of a correspondence relationship between TRIs and SRI. FIG. 14A shows an example in which the TRPs are associated directly with the SRI (RRC "PUCCH-SpatialRelationInfo"). In the present example, for the UE, N pieces of SRI are associated with TRP 1, and M pieces of SRI are associated with TRP 2 by higher layer signaling.

The UE may receive, for pieces of PUCCH SRI 1 to N, information to be associated with TRP 1, and receive, for pieces of PUCCH SRI M+1 to N+M, information to be associated with TRP 2.

FIG. 14B shows an example in which the TRPs are associated indirectly with the SRI (RRC "PUCCH-SpatialRelationInfo"). In the present example, for the UE, X reference signals (for example, CSI-RS, SSB, and SRS) are associated with TRP 1, and Y reference signals (for example, CSI-RS, SSB, and SRS) are associated with TRP 2, by higher layer signaling.

The UE may receive, for reference signals 1 to X, information to be associated with TRP 1, and receive, for reference signals X+1 to X+Y, information to be associated with TRP 2. The UE may receive, for each of the pieces of PUCCH SRI 1 to N+M, information to be associated with one of the reference signals 1 to X+Y. This association may correspond to assumption of QCL between the SRI and the TCI states (or SRI) of the reference signals. Note that in FIG. 14B, the SRI is associated with the reference signals on a one-to-one basis but that the present disclosure is not limited to this.

### [Configuration of PRGs (Group)]

For the UE, any of the following may be configured for each PUCCH resource.
- group ID common to T-PRGs and S-PRGs (the ID may also be referred to as a PRG index),
- both a group ID for T-PRGs (which may also be referred to as a T-PRG index) and a group ID for S-PRGs (which may also be referred to as an S-PRG index),
- only the S-PRG index, and
- only the T-PRG index.

For PUCCH resources for which only one of the T-PRG index and the S-PRG index is configured, the UE may determine the relationship between the PUCCH resources and the TRPs based on at least one of the CORESET ID, the CDM group, the TRP ID, and the like.

For the UE, the correspondence relationship between at least one of the above-described group IDs and the PUCCH resource ID may be configured for each piece of PUCCH configuration information (RRC information element "PUCCH-Config"), or for each PUCCH resource set, or for each PUCCH resource.

### <Others>

In the present disclosure, examples have mainly been described in which uplink control information (UCI) (HARQ-ACK) is transmitted using the PUCCH. However, the present disclosure is not limited to this. The contents of the present disclosure can be applied to a case where the UCI is transmitted by using the PUSCH (UCI on PUSCH). The PUSCH may be a PUSCH scheduled by the DCI or a configured grant PUSCH. The spatial relation information of the PUCCH can be interpreted as the spatial relation information of the reference signal for measurement (Sounding Reference Signal (SRS)) for the PUSCH.

The HARQ-ACK in the present disclosure may be interchangeably interpreted with one or a combination of channel state information (CSI), a scheduling request (SR).

In the present disclosure, the single PDCCH (DCI) may also be referred to as a PDCCH (DCI) of a first scheduling type (for example, scheduling type A (or type 1)). The multiple PDCCHs (DCI) may also be referred to as PDCCHs (DCI) of a second scheduling type (for example, scheduling type B (or type 2)).

In the present disclosure, the single PDCCH may be assumed to be supported in a case where multiple TRPs utilize an ideal backhaul. The multiple PDCCHs may be assumed to be supported in a case where the multiple TRPs utilize a non ideal backhaul.

Note that the ideal backhaul may be referred to as DMRS port group type 1, reference signal related group type 1, antenna port group type 1, and so on. The non ideal backhaul may be referred to as DMRS port group type 2, reference signal related group type 2, antenna port group type 2, and so on. The names are not limited to these.

In the present disclosure, which of the TRPs is scheduled by the DCI may be explicitly specified by a bit field in the DCI. In a case where at least one of the CORESET, the search space set, the QCL, the TCI state, and the like corresponding to the TRP is configured in advance, which of the TRPs is scheduled by the DCI may be determined by the UE based on at least one of the CORESET, the search space set, the QCL, the TCI state, and the like detecting the DCI.

In each of the embodiments described above, examples have been illustrated in which both the T-PRG and the S-PRG are identified by (the PUCCH resource with) the PRI. However, the present disclosure is not limited to this. At least one of the T-PRG and the S-PRG may be identified based on a field in the DCI that is not the PRI. For example, in a case where the DCI includes an SRI field for specifying the SRI, the S-PRG may be identified by the SRI field.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

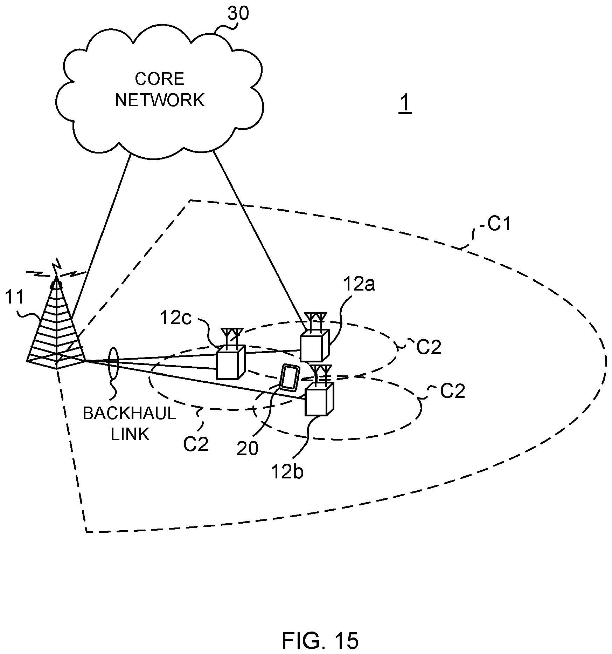

FIG. 15 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6GHz or less (sub-6GHz), and FR2 may be a frequency band which is higher than 24GHz (above-24GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

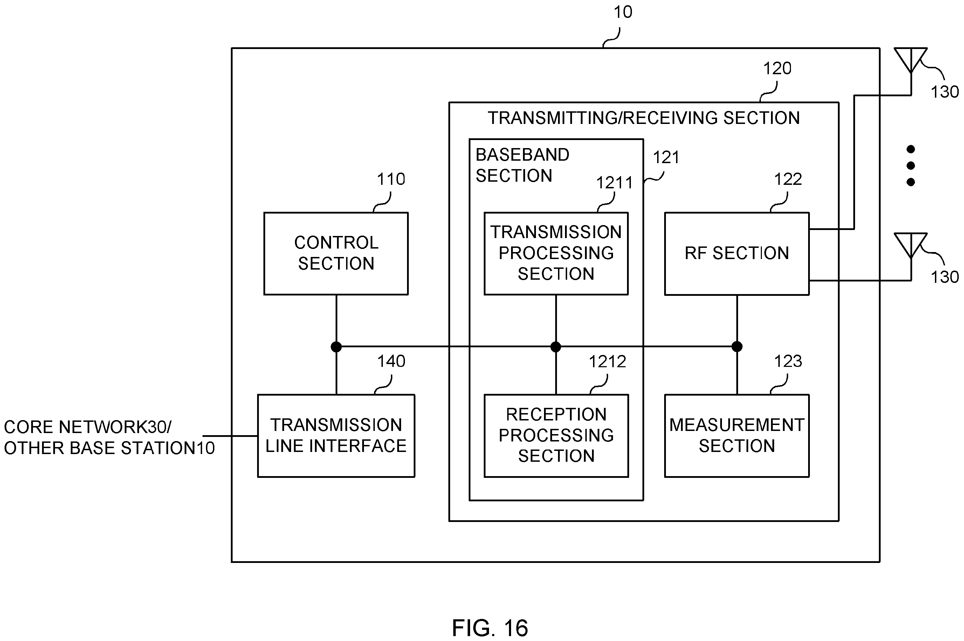

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving sections 120 may transmit a PDSCH to the user terminals 20. The control section 110 may control the PDSCH such that the PDSCH overlaps, in terms of at least time and frequency resources, a PDSCH transmitted from another base station 10.

### (User Terminal)

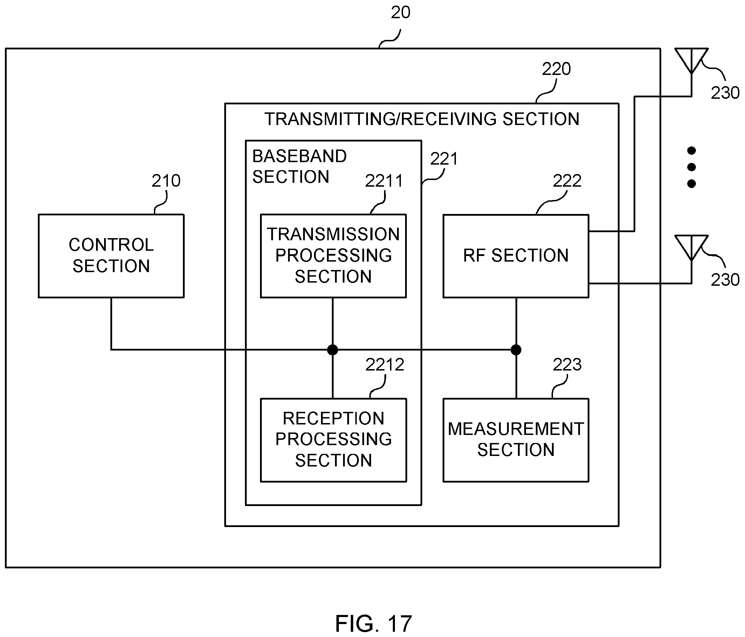

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a first PDSCH (Physical Downlink Shared Channel) from a first transmission/reception point (TRP), and a second PDSCH from a second TRP that overlaps the first PDSCH in terms of at least one of the time and frequency resources. In other words, the transmitting/receiving section 220 may receive multiple PDSCHs.

The control section 210 may identify, based on the correspondence relationship among the Physical Uplink Control Channel (PUCCH) resources, the groups for TRPs (T-PRGs), and the groups for spatial relation information (SRI)(S-PRGs), the TRP and the SRI associated with the PUCCH for the PDSCHs.

Note that the control section 210 may specify at least one of the TRP and the SRI associated with the PUCCH for the PDSCHs, based on the correspondence relationship between the PUCCH resources and the PRGs (at least the T-PRGs and the S-PRGs).

A PUCCH resource belonging to a first group for TRP may overlap a PUCCH resource belonging to a second group for TRP.

A PUCCH resource belonging to a first group for SRI may overlap a PUCCH resource belonging to a second group for SRI.

In a case where a plurality of groups for SRI correspond to a PUCCH resource belonging to a certain group for TRPs, the control section 210 may identify the SRI associated with the PUCCH for the PDSCH, based on a group for SRI corresponding to a specific group ID.

The control section 210 may assume that the SRI corresponding to a certain group for SRI may be indicated or updated based on a Medium Access Control (MAC) control element.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

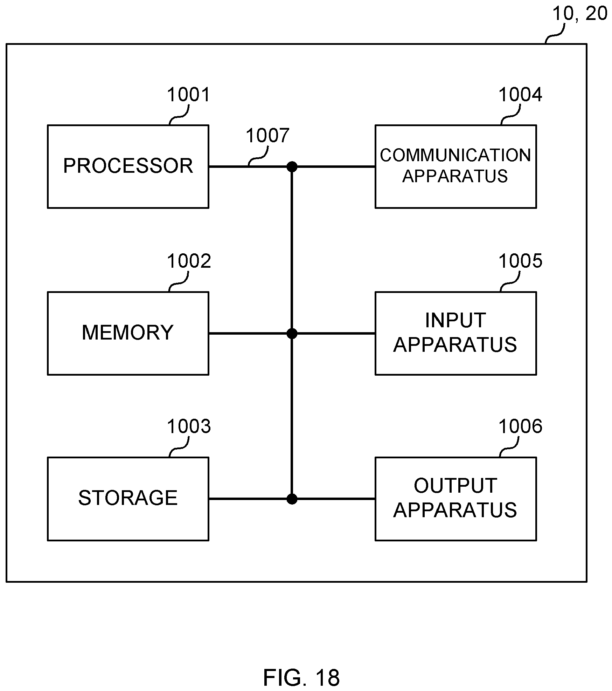

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a mobile body or a mobile body itself, and so on. The mobile body may be a vehicle (for example, a car, an airplane, and the like), may be a mobile body which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "side"). For example, an uplink channel, a downlink channel and so on may be interpreted as a side channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A user terminal comprising:
a receiving section that receives downlink shared channels (Physical Downlink Shared Channels (PDSCHs)) from a plurality of transmission/reception points (TRPs); and
a control section that identifies, based on a correspondence relationship among Physical Uplink Control Channel (PUCCH)) resources, groups for TRPs, and groups for spatial relation information (SRI), the TRP and SRI associated with a PUCCH for the PDSCHs.

2. The user terminal according to claim 1, wherein
a PUCCH resource belonging to a first group for TRPs overlaps a PUCCH resource belonging to a second group for TRPs.

3. The user terminal according to claim 1 or 2, wherein
a PUCCH resource belonging to a first group for SRI overlaps a PUCCH resource belonging to a second group for SRI.

4. The user terminal according to claim 3, wherein
in a case where a plurality of groups for SRI correspond to a PUCCH resource belonging to a certain group for TRPs, the control section identifies the SRI associated with the PUCCH for the PDSCHs, based on a group for SRI corresponding to a specific group ID.

5. The user terminal according to any one of claims 1 to 4, wherein
the control section assumes that the SRI corresponding to a certain group for SRI is indicated or updated based on a Medium Access Control (MAC) control element.

6. A radio communication method for a user terminal, the radio communication method comprising:
receiving downlink shared channels (Physical Downlink Shared Channels (PDSCHs)) from a plurality of transmission/reception points (TRPs); and
identifying, based on a correspondence relationship among Physical Uplink Control Channel (PUCCH)) resources, groups for TRPs, and groups for spatial relation information (SRI), the TRP and SRI associated with a PUCCH for the PDSCHs.
